# EUROPÄISCHE PATENTANMELDUNG

(11) **EP 4 635 289 A1**
(43) Veröffentlichungstag der Anmeldung: **22.10.2025**
(21) Anmeldenummer: 25162502.6
(22) Anmeldetag: 10.03.2025
(51) Int. Cl.: A01D 43/08, A01F 29/10

(54) **SELBSTFAHRENDER FELDHÄCKSLER**

(30) Priorität: 16.04.2024 DE 102024110633
(71) Anmelder: CLAAS Selbstfahrende Erntemaschinen GmbH, 33428 Harsewinkel (DE)
(72) Erfinder: Löffler, Niklas, 88367 Hohentengen (DE); Deufel, Tobias, 88605 Meßkirch-Menningen (DE)
(74) Vertreter: CLAAS Gruppe

(57) **Zusammenfassung**

Die Erfindung betrifft einen Selbstfahrender Feldhäcksler (2) umfassend zumindest eine Häckseleinrichtung (6) und eine Nachzerkleinerungseinrichtung (13), die in Gutflussrichtung eines Erntegutstroms (5) gesehen stromabwärts der Häckseleinrichtung (6) angeordnet ist, wobei die Nachzerkleinerungseinrichtung (13) zwei Walzen (18, 19) aufweist, die einen Durchgangsspalt begrenzen, wobei einer der Walzen (18, 19) verstellbewegliche Anschläge (27, 29) zum Verändern einer Durchgangsweite des Durchgangsspalts zwischen einer minimalen Durchgangsweite und einer maximalen Durchgangsweite zugeordnet sind, wobei ein Aktor (38) mittelbar oder unmittelbar zum Verstellen der Anschläge (27, 29) vorgesehen und eingerichtet ist, wobei eine Steuereinrichtung (39) zur Steuerung und/oder Regelung des Aktors (38) vorgesehen und eingerichtet ist, wobei die Steuerungseinrichtung (39) den Aktor (38) derart steuert und/oder regelt, sodass in einer definierten Betriebssituation des Feldhäckslers (2) die maximale Durchgangsweite des Durchgangsspalts eingestellt wird.

## Beschreibung

Die Erfindung betrifft einen selbstfahrenden Feldhäcksler gemäß dem Oberbegriff des Anspruchs 1.

Aus der EP 0 990 384 A1 ist ein Feldhäcksler mit einer Häckseleinrichtung und einem in Gutflussrichtung des geernteten Ernteguts der Häckseleinrichtung nachgeordneten Nachbeschleuniger bekannt. Im Gutfluss zwischen der Häckseleinrichtung und dem Nachbeschleuniger ist eine Nachzerkleinerungseinrichtung angeordnet, wobei die Nachzerkleinerungseinrichtung dann zum Einsatz kommt, wenn der Feldhäcksler Mais verarbeitet.

Die Nachzerkleinerungseinrichtung umfasst zwei Walzen, die auch Crackerwalzen genannt werden, die zwischen sich einen Durchgangsspalt begrenzen. Im bestimmungsgemäßen Betriebszustand der Nachzerkleinerungseinrichtung wird durch den Durchgangsspalt ein Erntegutstrom hindurchgeleitet. Der Durchgangsspalt wird derart eingestellt, sodass beim Passieren des Erntegutstroms die darin befindlichen Maiskörner aufgeschlossen werden. Zum Verstellen des Durchgangsspalts offenbart die EP 0 990 384 A1 eine Verstelleinrichtung, die manuell oder mittels eines Aktors betätigbar ist.

Nachteilig ist, dass sich in einem die Crackerwalzen bereichsweise umschließenden Gehäuseabschnitts Erntegutbestandteile ansammeln und aushärten können. Derartige Ansammlungen von Erntegutbestandteilen können vermehrt Verschleiß an den Walzen verursachen. Um dies zu vermeiden, ist ein manuelles Entfernen der Ansammlungen erforderlich.

Es ist deshalb Aufgabe der Erfindung, die beschriebenen Nachteile des Standes der Technik zu vermeiden und insbesondere Verschleißerscheinungen an zumindest einer Walze der Nachzerkleinerungseinrichtung zu reduzieren.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein selbstfahrender Feldhäcksler vorgeschlagen, umfassend zumindest eine Häckseleinrichtung und eine Nachzerkleinerungseinrichtung, die in Gutflussrichtung eines Erntegutstroms gesehen stromabwärts der Häckseleinrichtung angeordnet ist, wobei die Nachzerkleinerungseinrichtung zwei Walzen aufweist, die einen Durchgangsspalt begrenzen, wobei einer der Walzen verstellbewegliche Anschläge zum Verändern einer Durchgangsweite des Durchgangsspalts zwischen einer minimalen Durchgangsweite und einer maximalen Durchgangsweite zugeordnet sind, wobei ein Aktor mittelbar oder unmittelbar zum Verstellen der Anschläge vorgesehen und eingerichtet ist, wobei eine Steuereinrichtung zur Steuerung und/oder Regelung des Aktors vorgesehen und eingerichtet ist, wobei die Steuerungseinrichtung den Aktor derart steuert und/oder regelt, sodass in einer definierten Betriebssituation des Feldhäckslers die maximale Durchgangsweite des Durchgangsspalts eingestellt wird.

Dadurch, dass in der definierten Betriebssituation die maximal einstellbare Durchgansweite zwischen den Walzen eingestellt wird, werden an einem Gehäuseabschnitt, der zumindest eine der Walzen abschnittsweise umgibt, etwaige Ansammlungen von Erntegutbestandteilen entfernt, bevor diese aushärten und sich festsetzen. Zusätzlicher Verschleiß, der durch ausgehärtete Erntegutbestandteile in dem Gehäuseabschnitt an den Walzen entstehen kann, wird somit vermieden. Mit anderen Worten werden beim Anfahren der maximalen Durchgangsweite in dem Gehäuseabschnitt befindliche Erntegutbestandteile von der rotierenden Walze entfernt.

Eine vorteilhafte Weiterbildung sieht vor, dass die definierte Betriebssituation ein Schleifvorgang der Häckseleinrichtung ist. Beim Schleifen der Häckseleinrichtung ist der Erntegutstrom unterbrochen, sodass in dieser Betriebssituation kein Erntegut der Nachzerkleinerungseinrichtung zugeführt wird. Mithin bleibt beim Anfahren der maximalen Durchgangsweite in dieser Betriebssituation das Ernteergebnis unbeeinträchtigt.

Eine weitere vorteilhafte Weiterbildung sieht vor, dass die Anschläge einen Fluid beaufschlagbaren in Zylinder geführten Stößel umfassen, und dass die Zylinder mit einer einzigen mit einem Kolben ausgerüsteten Mehrkammerpumpe fluidleiten verbunden sind. Gemäß dieser Weiterbildung können die Anschläge im Gleichlauf mittels einer einzigen Pumpe verstellt werden.

Eine vorteilhafte Ausgestaltung sieht vor, dass die Anzahl der Kammern der Mehrkammerpumpe mit der Anzahl der zu steuernden Zylinder übereinstimmt, und dass der Kolben derart stufenförmig ausgebildet ist, dass beim Verfahren des Kolbens stets die gleiche Menge des Fluids aus den Kammern aus- bzw. einströmt. Dadurch werden alle ein- oder auszufahrenden Stößel um den gleichen Betrag verfahren.

Eine weitere vorteilhafte Ausgestaltung sieht vor, dass der Kolben der Mehrkammerpumpe mit dem Aktor trieblich verbunden ist. Mithin kann mittels des Aktors der Kolben verfahren werden, wobei wiederum mit dem Kolben zugleich die Stößel zum Verstellen der Anschläge und somit die Walze verfahren werden.

Eine weitere vorteilhafte Ausgestaltung sieht vor, dass der Aktor ein elektromotorischer Antrieb ist.

Eine weitere vorteilhafte Ausgestaltung sieht vor, dass zumindest eine der Walzen mittels Zug- oder Druckfedern mit den Anschlägen verspannt ist. Hierdurch kann sich die Walze bei Gutflussschwankungen von dem Anschlag lösen, sodass der Durchgangsspalt selbsttätig an den Erntegutstrom angepasst werden kann.

Die vorliegende Erfindung wird nachstehend anhand eines in den Zeichnungen dargestellten Ausführungsbeispiels näher erläutert.
- Figur 1: eine schematische Darstellung eines selbstfahrenden Feldhäckslers in Seitenansicht;
- Figur 2: eine Nachzerkleinerungseinrichtung in einer Seitenansicht;
- Figur 3: eine der Fig. 2 entsprechende Draufsicht;
- Figur 4: eine schematische Darstellung der Walzen einer Nachzerkleinerungseinrichtung, wobei eine zweite Position einer der Walzen gestrichelt dargestellt ist.

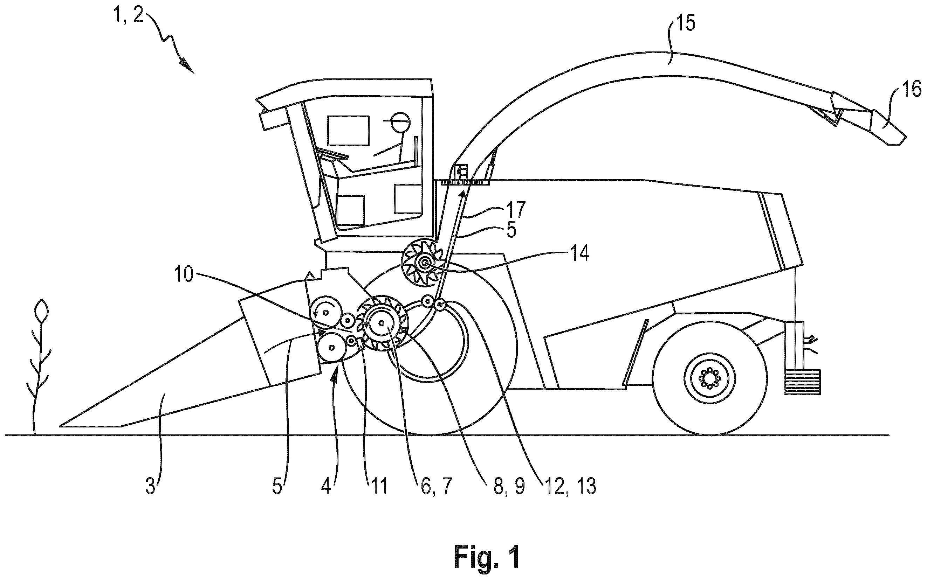

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann an eine als sogenannter Cracker 12 ausgeführte Nachzerkleinerungseinrichtung 13 und anschließend an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann.

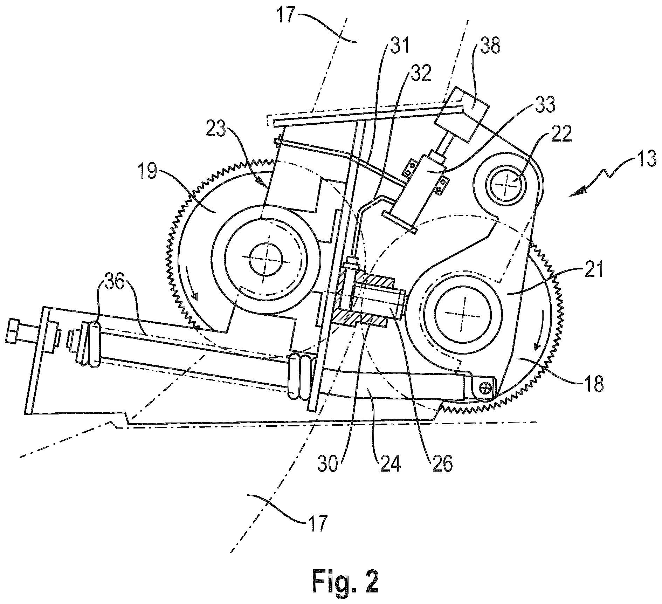

Die in der Fig. 2 dargestellte Anordnung zeigt schematisch eine Detailansicht einer Nachzerkleinerungseinrichtung 13. In strichpunktierten Linien ist der die Förderstrecke bildende Förderkanal 17 angedeutet, durch den der Erntegutstrom 5 geleitet wird. In diesen Förderkanal 17 ragen zwei als Crackerwalzen ausgebildete Walzen 18, 19 der Nachzerkleinerungseinrichtung 13 teilweise hinein. Diese Walzen 18, 19 werden eingesetzt, wenn der Feldhäcksler 2 zum Ernten von Mais eingesetzt wird. Durch die Walzen 18, 19 sollen die Körner aufgeschlossen werden, das heißt teilweise angeschlagen werden. Die Walzen 18, 19 werden in nicht näher erläuterter Weise gegensinnig angetrieben. Die in der Darstellung linke Walze 19 ist ortsfest gelagert, während die in der Darstellung rechte Walze 18 beidseitig in Schwingen 21 gelagert ist, die um eine horizontale Achse 22 schwenkbar ist. Wenn mit dem Feldhäcksler Gras oder dergleichen geerntet wird, wird der Gehäuseblock 23 mit den Walzen 18, 19 entnommen und durch ein einfaches, die Förderstrecke schließendes Gehäuse ersetzt. An die seitlichen Schwingen 21 sind Hebel 24 angelenkt. Mittels Zugfedern 36 wird die verstellbare Walze 18 in Richtung zur Walze 19 gezogen. Der Abstand der Walze 18 zur Walze 19 und somit auch die Durchgangsweite zwischen diesen beiden Walzen 18, 19 wird durch zwei seitliche Stößel 25, 26 bestimmt, die Anschläge 27, 28 für die Schwingen 21 bilden. Die Stößel 25, 26 sind in Zylindern 29, 30 verschiebbar angeordnet. Diese beiden Zylinder 29, 30 sind über zwei Druckleitungen 31, 32 mit einer Mehrkammerpumpe 33 strömungstechnisch verbunden. Dazu ist die Mehrkammerpumpe 33 mit zwei Anschlüssen 34 und 35 versehen.

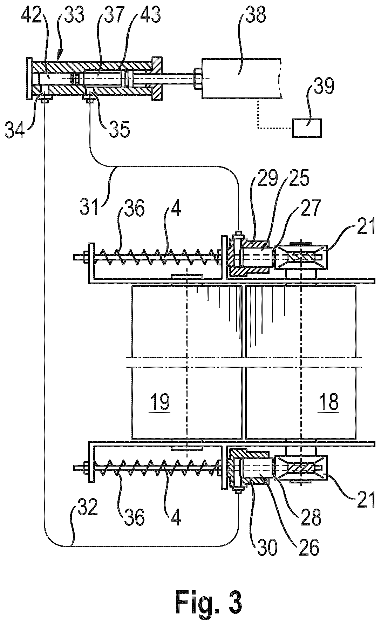

Wie sich aus der Fig. 3 ergibt, enthält die Mehrkammerpumpe 33 in diesem Falle zwei Kammern 42, 43 mit unterschiedlichen Durchmessern. Die Anzahl der Kammern 42, 43 der Mehrkammerpumpe 33 richtet sich nach der Anzahl der angeschlossenen Zylinder 29, 30. Die einzelnen Kammern sind jedoch durchgehend, da in der Mehrkammerpumpe 33 ein Kolben 37 verfahren wird, der entsprechend den Durchmessern der Kammern 42, 43 gestuft ist. Die Kammern 42, 43 und der Kolben 37 sind so ausgelegt, dass beim Verfahren des Kolbens 37 aus beiden Kammern 42, 43 die gleiche Menge des Fluid, vorzugsweise Hydrauliköl in die Zylinder 29, 30 gedrückt wird, oder dass beim Verfahren des Kolbens 37 in die entgegengesetzte Richtung die gleiche Menge des Fluids in die Kammern 42, 43 einströmen kann. Dadurch werden die beiden Stößel 25, 26 stets im Gleichlauf beziehungsweise synchron verfahren. Der Kolben 37 wird von einem Aktor 38 verfahren. Hier und vorzugsweise kann der Aktor 38 als ein Elektromotor oder eine Kolbenzylindereinheit ausgebildet sein.

Der Aktor 38 wird von einer in Fig. 3 schematisch dargestellten Steuerungseinrichtung 39 angesteuert. Die Steuerungseinrichtung 39 ist derart eingerichtet, sodass diese den Aktor 38 in einer definierten Betriebssituation des Feldhäckslers 2 automatisch zum Verfahren der Walze 18 ansteuert. In der definierten Betriebssituation wird die Walze 18 automatisch in eine Position verfahren, die der maximalen mittels der Anschläge 27, 28 bzw. Stößel 25, 26 einstellbaren Durchgangsweite entspricht. Die definierte Betriebssituation ist hierbei ein Schleifvorgang der Häckseleinrichtung 6, wobei die an der Häckseltrommel 7 angeordneten Häckselmesser 8 in an sich bekannter Weise mittels eines entlang der Breite der Häckseltrommel 7 bewegbaren Schleifsteins geschliffen werden.

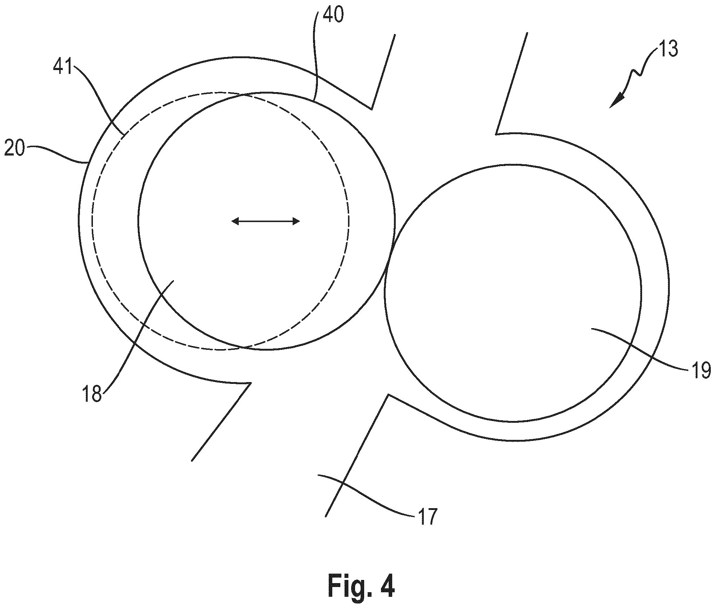

Fig. 4 zeigt eine schematische Darstellung des Förderkanals 17 und der Walzen 18, 19 der Nachzerkleinerungseinrichtung 13. Die Walze 18 ist in einer ersten Position 40 dargestellt, in der die Walze 18 in eine Position verfahren ist, die der minimal mittels des Aktors 38 einstellbaren Durchgangsweite entspricht. Der gestrichelt dargestellte Kreis zeigt eine zweite Position 41 der Walze 18, die der maximal mittels des Aktors 38 einstellbaren Durchgangsweite zwischen den Walzen 18, 19 entspricht. In der zweiten Position 41 ist die Walze 18 einen die Walze 18 radial außenseitig abschnittsweise umgebenden Gehäuseabschnitt 20 angenähert. Die Erfindung hat erkannt, dass sich in dem Gehäuseabschnitt 20 während des bestimmungsgemäßen Betriebs der Nachzerkleinerungseinrichtung 13 Erntegutbestandteile ansammeln und festsetzen. Die sich dort ansammelnden Erntegutbestandteile bilden mit der Zeit eine besonders verhärtete und schwer zu entfernende Ablagerung aus, die zu vermehrten Verschleiß an der Walze 18 führen kann. Um dies zu vermeiden, wird die Walze 18 in einem vorher definierten Betriebszustand regelmäßig dem Gehäuseabschnitt 20 angenähert, um die sich dort ansammelnden Erntegutbestandteile zu entfernen bevor diese sich festsetzen und aushärten. Das Anfahren der zweiten Position 41 während eines Schleifvorgangs der Häckseleinrichtung 6 bietet hierbei den besonderen Vorteil, dass der Erntevorgang bereits für das Schleifen unterbrochen ist und somit keine zusätzliche Unterbrechung des Erntevorgangs zum Entfernen von sich an dem Gehäuseabschnitt 20 ansammelnden Erntegutbestandteilen erforderlich ist.

### Bezugszeichenliste:

| | | | |
|---|---|---|---|
| 1 | Landwirtschaftliche Arbeitsmaschine | 34 | Anschluss |
| 2 | Feldhäcksler | 35 | Anschluss |
| 3 | Erntevorsatz | 36 | Zugfeder |
| 4 | Einzugs- und Vorpresswalzen | 37 | Kolben |
| 5 | Erntegutstrom | 38 | Aktor |
| 6 | Häckseleinrichtung | 39 | Steuerungseinrichtung |
| 7 | Häckseltrommel | 40 | Erste Position |
| 8 | Häckselmesser | 41 | Zweite Position |
| 9 | Häckselmesseranordnung | 42 | Kammer |
| 10 | Einzugsbereich | 43 | Kammer |
| 11 | Gegenschneide | | |
| 12 | Cracker | | |
| 13 | Nachzerkleinerungseinrichtung | | |
| 14 | Nachbeschleunigungseinrichtung | | |
| 15 | Auswurfkrümmer | | |
| 16 | Auswurfkrümmerklappe | | |
| 17 | Förderkanal | | |
| 18 | Walze | | |
| 19 | Walze | | |
| 20 | Gehäuseabschnitt | | |
| 21 | Schwinge | | |
| 22 | Achse | | |
| 23 | Gehäuseblock | | |
| 24 | Hebel | | |
| 25 | Stößel | | |
| 26 | Stößel | | |
| 27 | Anschlag | | |
| 28 | Anschlag | | |
| 29 | Zylinder | | |
| 30 | Zylinder | | |
| 31 | Druckleitung | | |
| 32 | Druckleitung | | |
| 33 | Mehrkammerpumpe | | |

## Patentansprüche

1. Selbstfahrender Feldhäcksler (2) umfassend zumindest eine Häckseleinrichtung (6) und eine Nachzerkleinerungseinrichtung (13), die in Gutflussrichtung eines Erntegutstroms (5) gesehen stromabwärts der Häckseleinrichtung (6) angeordnet ist, wobei die Nachzerkleinerungseinrichtung (13) zwei Walzen (18, 19) aufweist, die einen Durchgangsspalt begrenzen, wobei einer der Walzen (18, 19) verstellbewegliche Anschläge (27, 29) zum Verändern einer Durchgangsweite des Durchgangsspalts zwischen einer minimalen Durchgangsweite und einer maximalen Durchgangsweite zugeordnet sind, wobei ein Aktor (38) mittelbar oder unmittelbar zum Verstellen der Anschläge (27, 29) vorgesehen und eingerichtet ist,
**dadurch gekennzeichnet, dass**
eine Steuereinrichtung (39) zur Steuerung und/oder Regelung des Aktors (38) vorgesehen und eingerichtet ist, wobei die Steuerungseinrichtung (39) den Aktor (38) derart steuert und/oder regelt, sodass in einer definierten Betriebssituation des Feldhäckslers (2) die maximale Durchgangsweite des Durchgangsspalts eingestellt wird.

2. Selbstfahrender Feldhäcksler (2) nach Anspruch 1, **dadurch gekennzeichnet, dass** die definierte Betriebssituation ein Schleifvorgang der Häckseleinrichtung (6) ist.

3. Selbstfahrender Feldhäcksler (2) nach einem der Ansprüche 1 oder 2, **dadurch gekennzeichnet, dass** die Anschläge (27, 28) jeweils einen Fluid beaufschlagbaren in Zylinder (29, 30) geführten Stößel (25, 26) umfassen, und dass die Zylinder (29, 30) mit einer einzigen mit einem Kolben (37) ausgerüsteten Mehrkammerpumpe (33) fluidleitend verbunden sind.

4. Selbstfahrender Feldhäcksler (2) nach Anspruch 3, **dadurch gekennzeichnet, dass** die Anzahl der Kammern (42, 43) der Mehrkammerpumpe (33) mit der Anzahl der zu steuernden Zylinder (29, 30) übereinstimmt, und dass der Kolben (37) derart stufenförmig ausgebildet ist, dass beim Verfahren des Kolbens (37) stets die gleiche Menge des Fluids aus den Kammern aus- bzw. einströmt.

5. Selbstfahrender Feldhäcksler (2) nach einem der Ansprüche 3 bis 4, **dadurch gekennzeichnet, dass** der Kolben (37) der Mehrkammerpumpe (33) mit dem Aktor (38) trieblich verbunden ist.

6. Selbstfahrender Feldhäcksler (2) nach einem der Ansprüche 1 bis 5, **dadurch gekennzeichnet, dass** der Aktor (38) ein elektromotorischer Antrieb ist.

7. Selbstfahrender Feldhäcksler (2) nach einem der Ansprüche 1 bis 6, **dadurch gekennzeichnet, dass** zumindest eine der Walzen (18, 19) mittels Zug- oder Druckfedern (36) mit den Anschlägen (27, 28) verspannt ist.
